Europäisches Patentamt

European Patent Office

Office européen des brevets

(11) Publication number: **0 046 809**

**B1**

(12) **EUROPEAN PATENT SPECIFICATION**

(45) Date of publication of patent specification: **22.05.85**

(51) Int. Cl.⁴: **F 16 B 15/04**

(21) Application number: **81900497.9**

(22) Date of filing: **21.02.81**

(86) International application number:
**PCT/JP81/00034**

(87) International publication number:
**WO 81/02449 03.09.81 Gazette 81/21**

(54) **NAIL.**

(30) Priority: **22.02.80 JP 22671/80**

(43) Date of publication of application:
**10.03.82 Bulletin 82/10**

(45) Publication of the grant of the patent:
**22.05.85 Bulletin 85/21**

(84) Designated Contracting States:
**GB LU NL**

(56) References cited:
**DE-A-1 625 348**
**DE-A-1 775 087**
**JP-A-44 016 485**
**JP-A-46 001 261**
**JP-A-47 005 445**
**JP-A-49 095 070**
**JP-Y-39 036 056**
**JP-Y-40 011 935**
**JP-Y-53 020 609**

(73) Proprietor: **WAKAI INDUSTRY CO. LTD.**
**2, Higashishimizu-cho Minami-ku, Osaka-shi**
**Osaka 542 (JP)**

(72) Inventor: **HASEGAWA, Takeo**
**352-27, Sakamotoanoucho**
**Otsu-shi Shiga 520-01 (JP)**

(74) Representative: **Morgan, James Garnet et al**
**MANITZ FINSTERWALD & ROTERMUND Robert-**
**Koch-Strasse 1**
**D-8000 München 22 (DE)**

Courier Press, Leamington Spa, England.

## Description

The present invention relates to the structure of a nail to be driven into wall surfaces etc. of a building, in particular into a base material such as expanded concrete which is soft and porous.

Old-type nails are inadequate for this purpose because, having smooth circumferential surfaces around their shanks, they often come away from the base material into which they have been driven.

In order to prevent this a nail has been developed which is provided, around the circumferential surface of the root of its shank, with means to stop the nail coming away from the base material into which it is driven, said means including spiral grooves, ring-shaped grooves or protruding ribs. Such means are adequate to prevent the nail coming away from a base material such as wood but an adequate countering force can hardly be expected in soft, porous materials, such as expanded concrete, because of the small degree of friction between the nail and the base material.

One type of nail suitable for use in soft porous material is described in DE—A—1 625 348. This known nail comprises a pair of nail shank pieces united face to face at the head part of the nail, the nail shank pieces have mutually inclined surfaces formed on facing sides of their tip parts thereby forming an outwardly flared opening between the facing inclined surfaces; means positioned between the nail shank pieces for spreading the same apart during driving in of the nail; and a clamping ring put around the outer circumference of the nail adjacent the tip thereof, said clamping ring being adapted to move axially along the nail towards the head part as the nail is driven in.

In this known nail the means for spreading the nail shank pieces apart during driving in of the nail comprises a small wedge which is initially located in the outwardly flared opening in front of the clamping ring. This wedge, which does not deform during driving in of the nail, can however easily be lost prior to driving in of the nail and can move sideways out of the region between the nail or shank pieces during driving in of the nail, so that it is no longer in a position to continue fulfilling its special role. Furthermore, the small size of the wedge means that its effect in preventing withdrawal of the nail is limited.

It is an object of the present invention to provide a nail which, after being driven in, exhibits a very powerful countering force against its coming away, and which in particular has a sufficiently large resistance or countering force to prevent it coming away from a base material such as expanded concrete which is soft and porous.

In order to satisfy this object there is provided, in accordance with the present invention, a nail of the kind previously known from DE—A—1 625 348, with the nail being characterised in that said nail shank pieces are united face to face through the intermediary of a strip of plastically deformable metal which extends through said clamping ring adjacent the tip of said nail but which is somewhat shorter than the shank of the nail, said strip of metal constituting said means for spreading the nail shank pieces apart during driving in of the nail and said clamping ring holding said metal strip between said nail shank pieces.

When this nail is driven into a soft and porous base material, such as expanded concrete, not only do the two nail shank pieces open to both sides, but the metal strip undergoes compressive deformations, thereby holding the nail shank pieces in their opened (spread apart) state from the inside. Accordingly, the two nail shank pieces engage with the base material in a dovetail fashion providing a powerful countering force which resists the nail coming away from the base material.

In the nail of this invention the clamping ring is not only put around the outer circumference of the two nail shank pieces it also holds the metal strip therebetween. In manner known per se from DE—A—1 625 348 this clamping ring, placed at the surface part of the base material, prevents the nail shank pieces from opening at the base material surface and aids the nail shank pieces in entering deep into the base material, as well as preventing the expansion of the opening made by the nail at the base material surface.

In a preferred embodiment of the nail a fixing ring is fitted and set in place around the outer circumference of the root parts of both nail shank pieces at the head part of the nail.

The two nail shank pieces are preferably formed of a material which will undergo a plastic deformation when they are driven in.

The width of said strip of metal is preferably the same as that of the shank of the nail.

A preferred embodiment of the invention will now be described, by way of example, with reference to the accompanying drawings in which:

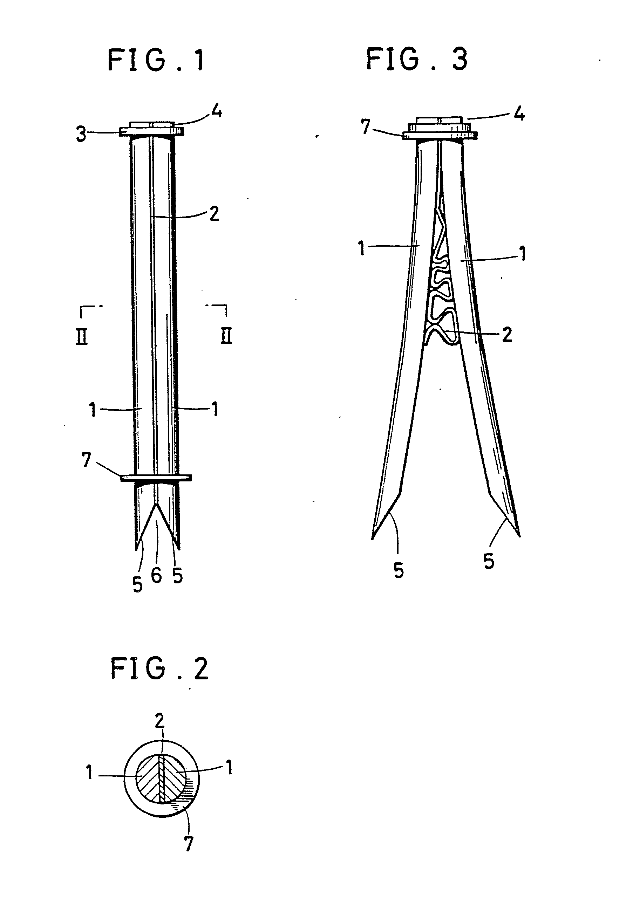

Fig. 1 is a front view of the nail,

Fig. 2 is a sectional view of the nail along the line II—II of Fig. 1,

Fig. 3 is a front view showing the configuration of the nail when completely driven in, and

Figs. 4 through 6 are explanatory views showing how the nail driving proceeds.

In the nail structure illustrated by these views, a pair of nail shank pieces 1 each having a semicircular cross-section are positioned so as to face to each other with their flat sides turned inward. A thin strip of metal 2 is interposed between both nail shank pieces 1, and the three parts are closely integrally put together. The metal strip 2 is formed of a metal such as copper, stainless steel, etc. Its width is made identical with that of the nail shank, but its length is made somewhat shorter than the length of the nail shank. A fixing ring 3 is fitted and set onto the root parts of both nail shank pieces 1, to form the nail head part 4. Respective, symmetrical, inclined surfaces 5 are formed at the tip parts of both nail shank pieces 1, on the facing sides of the shank pieces, so that the outer edge sides of the tips of the nail shank pieces 1 are sharpened, and an outwardly flared opening 6 is formed between the facing inclined surfaces 5.

A washer-like clamping ring 7 is closely fitted on the circumferential surfaces of the bottom parts of the two nail shank pieces 1 holding the metal strip 2 therebetween. This clamping ring 7 holds both nail shank pieces 1 and the metal strip 2 in close contact with each other and, as the nail is driven in, the ring is pressed by the base material to move, in effect, upwardly in the axial direction along the circumference of the two nail shank pieces 1, i.e. toward the head part 4 of the nail.

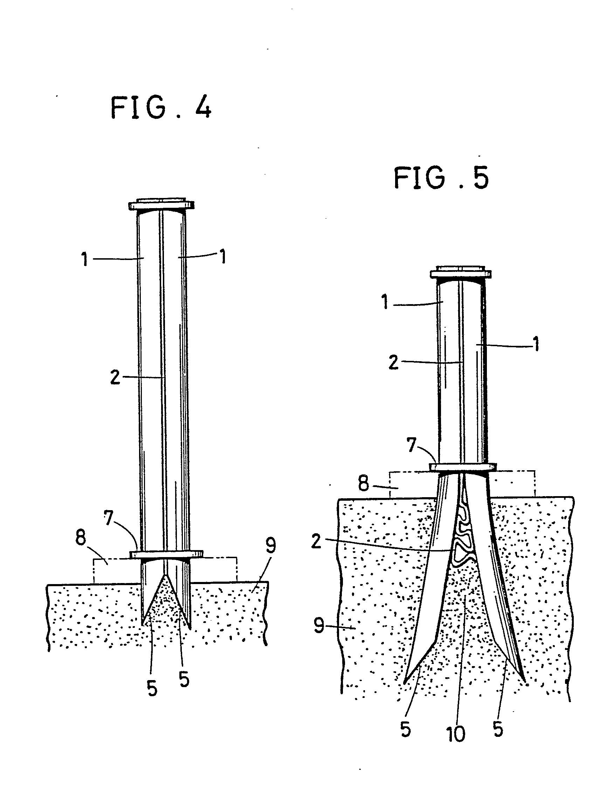

Figs. 4 through 6 show how a structural member 8 is securely set in place on the surface of such a soft and porous base material 9 as expanded concrete.

At the initial stage of driving the nail into the base material 9, both nail shank pieces 1 will go straight into the base material 9 in the closed state (Fig. 4) because the base material is soft.

As the tip of the nail enters deeper and deeper into the base material, the material located in the path of entry of the nail is subjected to thrusting and pinching pressures by the inclined surfaces 5 of its tip parts. The material will then be compressed and hardened, so that it is more compact, when compared with the surrounding part of the material. A counterforce from the hardened material 10 is then exerted in the vertical direction on the tapered surfaces 5 of the tip parts of the both nail shank pieces 1. This force separates the facing nail shank pieces 1 pushing them outwardly from each other as the driving of the nail proceeds (Fig. 5).

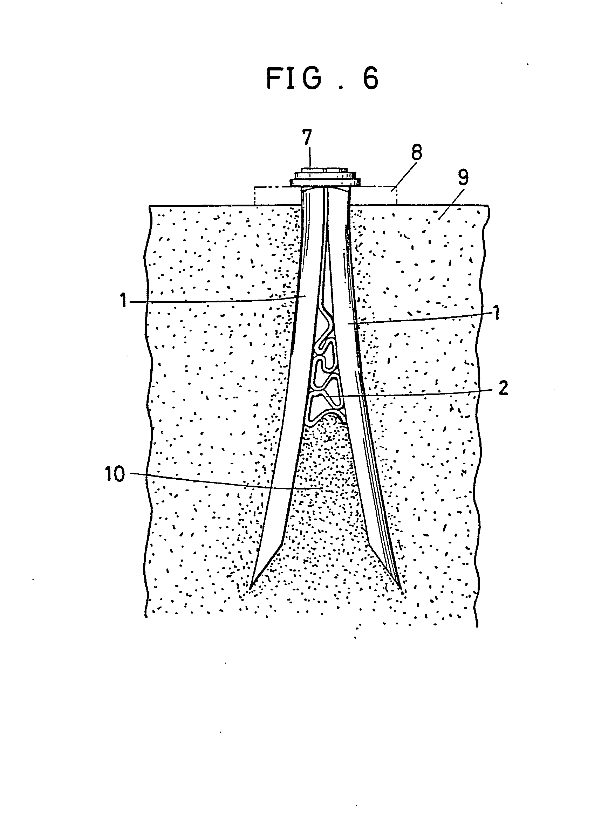

As the tip parts of the nail shank pieces 1 start opening, the counterforce of the hardened material 10 acts upon the metal strip 2 placed between the nail shank pieces 1. The metal strip 2 undergoes compressive deformations sinuously in response to driving in of the nail, thus filling the gap between the two nail shank pieces 1 in cooperation with the hardened material 10. Accordingly, the nail shank pieces 1 are opened outwardly wider and wider, finally to engage with the base material 9 in a dovetail fashion when the nail has been completely driven into the base material (Fig. 6).

In response to the driving-in of the nail the clamping ring 7 is pressed by the structural member 8 so that, in effect, it moves up the nail shank pieces 1, so that it always stays at the surface part of the structural member 8. Thus this ring 7 prevents the opening of the two nail shank pieces 1 at the surface of the base material 9. Accordingly, the ring 7 not only aids the two nail shank pieces 1 in entering deep into the base material 9, but also serves to prevent the opening made by the nail at the surface of the base material 9 from growing larger.

The nail shank pieces 1 thus driven into the base material 9 are held in their opened state under the powerful counterforces of the sinuously deformed metal strip 2 and the hardened material 10 and the frictional resistance between the nail shank 1 and the base material increases in proportion to these forces. It is for this reason that the nail of this invention exhibits such a large counterforce against its coming-away that its drawing-out is impossible once it has been driven in.

The nail of this invention is formed of a material which undergoes a plastic deformation (permanent deformation) as it is driven into the base material 9. The size and the sectional shape of the nail shank 1 are appropriately chosen, so that its dovetail fashion engagement with the base material 9 may be semipermanently maintained.

## Claims

1. A nail comprising a pair of nail shank pieces (1) united face to face at the head part (4) of the nail, the nail shank pieces (1) having inclined surfaces (5) formed on facing sides of their tip parts thereby forming an outwardly flared opening (6) between the facing inclined surfaces (5); means (2) positioned between the nail shank pieces (1) for spreading the same apart during driving in of the nail; and a clamping ring (7) put around the outer circumference of the nail adjacent the tip thereof, said clamping ring (7) being adapted to move axially along the nail towards the head part (4) as the nail is driven in, characterised in that said nail shank pieces (1) are united face to face through the intermediary of a strip of plastically deformable metal (2) which extends through said clamping ring (7) adjacent the tip of said nail but which is somewhat shorter than the shank of the nail, said strip of metal (2) constituting said means for spreading the nail shank pieces (1) apart during driving in of the nail and said clamping ring (7) holding said metal strip (2) between said nail shank pieces (1).

2. A nail according to claim 1, characterised in that a fixing ring (3) is fitted and set in place around the outer circumference of the root parts of both nail shank pieces (1) at the head part (4) of the nail.

3. A nail according to claim 1 or 2, characterised in that the two nail shank pieces (1) are formed of a material which will undergo a plastic deformation when they are driven in.

4. A nail according to any one of the preceding claims, characterised in that the width of said strip of metal (2) is the same as that of the shank of the nail.

## Patentansprüche

1. Nagel, bestehend aus einem Paar Nagelschaftstücken (1), die Fläche an Fläche am Kopfteil (4) des Nagels vereinigt sind, wobei die Nagelschaftstücke (1) an den einander zugewendeten Seiten ihrer Spitzenteile geneigte Flächen (5) ausgebildet besitzen, wodurch sie eine nach außen sich erweiternde Öffnung (6) zwischen den einander zugewendeten geneigten Flächen (5) bilden, zwischen den Nagelschaftstücken (1) angeordneten Mitteln (2) zum Auseinanderspreizen derselben während des Eintreibens des Nagels und einem um den Außenumfang des Nagels seiner Spitze benachbart gesetzten Klemmring (7), wobei der Klemmring (7) dazu ausgelegt ist, sich in Axialrichtung längs des Nagels zu dem Kopfteil (4) zu bewegen, während der Nagel eingetrieben wird, dadurch gekennzeichnet, daß die Nagelschaftstücke (1) Fläche an Fläche vereinigt sind unter Zwischenlage eines Streifens aus plastisch verformbarem Metall (2), welches sich durch den der Spitze des Nagels benachbarten Klemmring (7) erstreckt, jedoch etwas kürzer als der Schaft des Nagels ist, wobei der Metallstreifen (2) das Mittel zum Auseinanderspreizen der Nagelschaftstücke (1) während des Eintreibens des Nagels bildet und der Klemmring (7) den Metallstreifen (2) zwischen den Nagelschaftstücken (1) hält.

2. Nagel nach Anspruch 1, dadurch gekennzeichnet, daß ein Befestigungsring (3) um den Außenumfang der Fußteile beider Nagelschaftstücke (1) am Kopfteil (4) des Nagels gepaßt und an dieser Stelle eingesetzt ist.

3. Nagel nach Anspruch 1 oder 2, dadurch gekennzeichnet, daß die beiden Nagelschaftstücke (1) aus einem Material gebildet sind, das bei ihrem Eintreiben eine plastische Verformung erfährt.

4. Nagel nach einem der vorangehenden Ansprüche, dadurch gekennzeichnet, daß die Breite des Metallstreifens (2) gleich der des Nagelschaftes ist.

**Revendications**

1. Piton comprenant deux pièces (1) de tige de piton unies face à face, à la partie de tête (4) du piton, les pièces (1) de tige du piton présentant des surfaces inclinées (5) formées sur des côtés opposés de leurs parties de pointe afin de former une ouverture (6) s'évasant vers l'extérieur entre les surfaces inclinées opposées (5); des moyens (2) positionnés entre les pièces (1) de tige du piton afin de les écarter l'une de l'autre pendant l'enfoncement du piton; et un anneau (7) de bridage placé sur la circonférence extérieure du piton à proximité immédiate de sa pointe, ledit anneau (7) de bridage étant conçu pour se déplacer axialement le long du piton vers la partie de tête (4) pendant que le piton est enfoncé, caractérisé en ce que lesdites pièces (1) de tige du piton sont unies face à face par l'intermédiaire d'une bande de métal (2) plastiquement déformable qui passe à travers ledit anneau (7) de bridage, à proximité immédiate de la pointe dudit piton, mais qui est quelque peu plus courte que la tige du piton, ladite bande de métal (2) constituant ledit moyen destiné à écarter l'une de l'autre les pièces (1) de la tige du piton pendant l'enforcement du piton et ledit anneau (7) de bridage maintenant ladite bande (2) de métal entre lesdites pièces (1) de la tige du piton.

2. Piton selon la revendication 1, caractérisé en ce qu'un anneau (3) de fixation est monté et maintenu en position sur la circonférence extérieure des parties de base des deux pièces (1) de la tige du piton situées à la partie de tête (4) du piton.

3. Piton selon la revendication 1 ou 2, caractérisé en ce que les deux pièces (1) de tige du piton sont formées d'une matière qui subit une déformation plastique lorsqu'elles sont enfoncées.

4. Piton selon l'une quelconque des revendications précédentes, caractérisé en ce que la largeur de ladite bande (2) de métal est la même que celle de la tige du piton.

# FIG . 1

# FIG . 3

# FIG . 2

FIG . 4

FIG . 5

FIG . 6